# DEMANDE DE BREVET EUROPEEN

(11) **EP 1 110 844 A1**
(43) Date de publication de la demande: **27.06.2001**
(21) Numéro de dépôt: 00403382.5
(22) Date de dépôt: 01.12.2000
(51) Int. Cl.: B62D 1/184

(54) **Dispositif de blocage en position d'une colonne de direction réglable notamment pour véhicule automobile et ensemble de colonne comportant un tel dispositif**

(30) Priorité: 10.12.1999 FR 9915631
(71) Demandeur: Faurecia Industries, 92100 Boulogne-Billancourt (FR)
(72) Inventeur: Richard, Nicolas, 25600 Dambenois (FR); Maistre, Olivier, 90000 Belfort (FR)
(74) Mandataire: Habasque, Etienne Joel Jean-François

(57) **Abrégé**

Ce dispositif comportant une structure de support de colonne, reliée au reste de la structure du véhicule et comportant deux flasques (2,3) entre lesquels est disposée la colonne (1), et un tirant rotatif (4) s'étendant entre les flasques (2,3), associés à des moyens de serrage des flasques autour de la colonne par rapprochement de ceux-ci, pour bloquer la colonne en position, sous le contrôle d'un levier de manoeuvre (5) actionnable par un utilisateur et déplaçable entre une position escamotée de déverrouillage de la colonne pour permettre son réglage en position et une position active de verrouillage en position de celle-ci, est caractérisé en ce que le levier de manoeuvre (5) et au moins une portion (16) des moyens de serrage sont reliés directement au moins en rotation au tirant (4).

## Description

La présente invention concerne un dispositif de blocage en position d'une colonne de direction réglable notamment pour véhicule automobile et un ensemble de colonne comportant un tel dispositif.

On connaît déjà dans l'état de la technique, des dispositifs de blocage en position de colonnes de direction pour véhicules automobiles qui comportent une structure de support de colonne adaptée pour être reliée au reste de la structure du véhicule et qui est munie de deux flasques entre lesquels est disposée la colonne et un tirant rotatif s'étendant entre les flasques, ce tirant étant associé à des moyens de serrage des flasques autour de la colonne par rapprochement de ceux-ci, pour bloquer cette colonne en position, sous le contrôle d'un levier de manoeuvre actionnable par un utilisateur et déplaçable entre une position escamotée de déverrouillage de la colonne pour permettre son réglage en position et une position active de verrouillage en position de celle-ci.

On pourra par exemple se reporter aux documents EP-A-0 592 278 et EP-A-0 600 700, qui décrivent de tels dispositifs.

Cependant, dans ces dispositifs, le levier de manoeuvre est relié à une portion des moyens de serrage des flasques autour de la colonne, ce qui se traduit par des problèmes de guidage et de maintien du levier en particulier lorsque celui-ci est en position escamotée de déverrouillage de la colonne.

Le but de l'invention est donc de résoudre ces problèmes.

A cet effet, l'invention a pour objet un dispositif de blocage en position d'une colonne de direction réglable notamment pour véhicule automobile, du type comportant une structure de support de colonne adaptée pour être reliée au reste de la structure du véhicule et comportant deux flasques entre lesquels est disposée la colonne et un tirant rotatif s'étendant entre les flasques, associés à des moyens de serrage des flasques autour de la colonne par rapprochement de ceux-ci, pour bloquer la colonne en position, sous le contrôle d'un levier de manoeuvre actionnable par un utilisateur et déplaçable entre une position escamotée de déverrouillage de la colonne pour permettre son réglage en position et une position active de verrouillage en position de celle-ci, caractérisé en ce que le levier de manoeuvre et au moins une portion des moyens de serrage sont reliés directement au moins en rotation au tirant.

Selon un autre aspect, l'invention a également pour objet un ensemble de colonne comportant un tel dispositif.

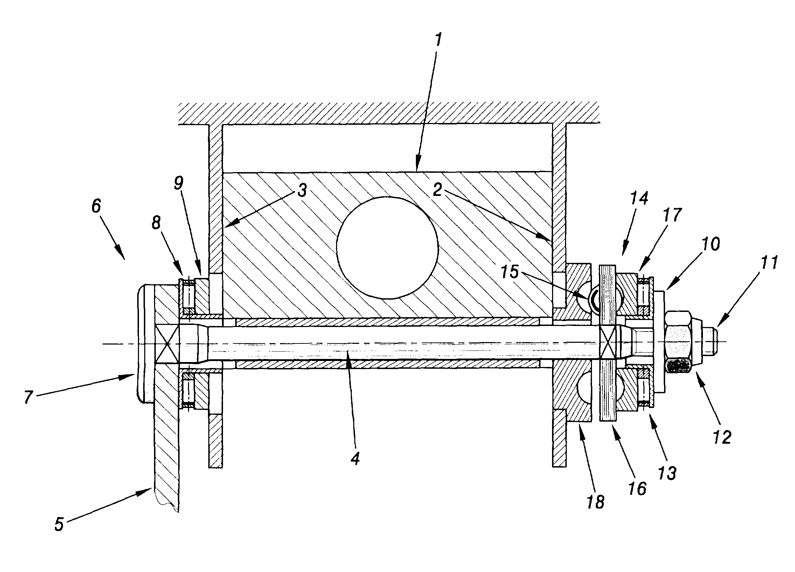

L'invention sera mieux comprise à la lecture de la description qui va suivre, donnée uniquement à titre d'exemple et faite en se référant au dessin annexé qui représente une vue en coupe partielle d'un dispositif de blocage selon l'invention.

On a en effet représenté sur cette figure, un dispositif de blocage en position d'une colonne de direction réglable notamment pour véhicule automobile, sur laquelle la colonne est désignée par la référence générale 1.

Cette colonne est associée au reste de la structure du véhicule par l'intermédiaire d'une structure de fixation de colonne adaptée pour être fixée à cette structure du véhicule et comportant deux flasques 2 et 3 entre lesquels est disposée la colonne 1.

Cette structure de support est également associée à un tirant rotatif désigné par la référence générale 4, s'étendant entre les flasques 2 et 3, ce tirant étant associé à des moyens de serrage des flasques autour de la colonne par rapprochement de ceux-ci pour bloquer la colonne en position, sous le contrôle d'un levier de manoeuvre désigné par la référence générale 5 actionnable par un utilisateur et déplaçable entre une position escamotée de déverrouillage de la colonne pour permettre son réglage en position et une position active de verrouillage en position de celle-ci.

Dans l'exemple de réalisation représenté, le levier de manoeuvre 5 est relié au moins en rotation au tirant 4 par exemple au niveau de l'une des extrémités 6 de celui-ci pour l'entraîner en rotation lors de ses déplacements.

Ce tirant 4 comporte alors à cette extrémité par exemple une tête désignée par la référence générale 7 et le levier 5 est interposé entre cette tête du tirant et des moyens de roulement désignés par la référence générale 8 constitués par exemple par une butée à aiguilles ou à billes, en appui sur une rondelle 9, elle-même en appui sur le flasque 3 de la structure de fixation.

Au niveau de l'autre de ses extrémités, désignée par la référence générale 10 sur cette figure, le tirant 4 comporte une portion filetée désignée par la référence générale 11, sur laquelle est engagé un écrou de serrage 12 en appui sur des moyens de roulement désignés par la référence générale 13, comportant par exemple également une butée à aiguilles ou à billes.

Ces moyens de roulement sont eux-mêmes en appui sur des moyens de rapprochement des flasques, désignés par la référence générale 14 et interposés entre ces moyens de roulement 13 et l'autre flasque 2 de la structure de support.

Dans l'exemple de réalisation représenté sur cette figure, ces moyens de rapprochement comprennent des billes dont l'une est désignée par la référence générale 15 sur cette figure, disposées dans une cage de déplacement 16 reliée au moins en rotation au tirant 4.

La ou chaque bille est alors interposée entre une rondelle de guidage désignée par la référence générale 17 en appui sur les moyens de roulement 13 et un organe d'appui intermédiaire 18 dont l'une des faces comporte par exemple des rampes sur lesquelles se déplacent les billes et dont l'autre des faces est en appui sur le flasque 2 de la structure de fixation.

On conçoit alors que lors d'un déplacement en rotation du levier 5, le tirant 4 est entraîné en rotation et entraîne la cage d'entraînement 16 des billes 15 qui se déplacent alors le long des rampes prévues sur l'organe d'appui intermédiaire 18, pour provoquer un écartement de cet organe d'appui intermédiaire 18 par rapport au reste des moyens placés à cette extrémité du tirant 4 par déplacement axial de cet organe d'appui intermédiaire 18 sur le tirant et donc un rapprochement des flasques 2 et 3 pour serrer ceux-ci autour de la colonne de direction 1 afin de la bloquer en position.

La présence des moyens de roulement 8 et 13 permet d'éviter tout frottement afin d'optimiser le fonctionnement du dispositif.

Il va de soi bien entendu que d'autres modes de réalisation encore d'un tel dispositif peuvent être envisagés.

C'est ainsi par exemple que le levier 5 peut être relié au tirant à un autre endroit que celui représenté, comme par exemple au niveau de la partie intermédiaire de celui-ci entre les flasques de la structure de fixation.

De même, d'autres modes de réalisation des moyens de rapprochement des flasques peuvent être envisagés.

C'est ainsi par exemple que des galets de roulement peuvent être utilisés en lieu et place de billes représentées, ces galets de roulement étant alors portés par une cage de déplacement liée en rotation au tirant et remplaçant la cage d'entraînement 16 et la rondelle de guidage 17 représentées sur cette figure.

## Revendications

1. Dispositif de blocage en position d'une colonne de direction réglable notamment de véhicule automobile, du type comportant une structure de support de colonne, reliée au reste de la structure du véhicule et comportant deux flasques (2,3) entre lesquels est disposée la colonne (1), et un tirant rotatif (4) s'étendant entre les flasques (2,3), associés à des moyens de serrage des flasques autour de la colonne par rapprochement de ceux-ci, pour bloquer la colonne en position, sous le contrôle d'un levier de manoeuvre (5) actionnable par un utilisateur et déplaçable entre une position escamotée de déverrouillage de la colonne pour permettre son réglage en position et une position active de verrouillage en position de celle-ci, caractérisé en ce que le levier de manoeuvre (5) et au moins une portion (16) des moyens de serrage sont reliés directement au moins en rotation au tirant (4).

2. Dispositif selon la revendication 1, caractérisé en ce que la portion des moyens de serrage reliée en rotation au tirant est formée par une cage (16) de déplacement d'au moins un organe de roulement (15) le long d'une rampe correspondante ménagée sur un organe d'appui intermédiaire (18) en appui sur l'un des flasques (2) de la structure de support.

3. Ensemble de colonne de direction réglable notamment pour véhicule automobile, caractérisé en ce qu'il comporte un dispositif de blocage selon l'une quelconque des revendications précédentes.
